# FASCICULE DE BREVET EUROPEEN

(11) **EP 3 113 331 B1**
(45) Date de publication et mention de la délivrance du brevet: **21.04.2021**
(21) Numéro de dépôt: 16155120.5
(22) Date de dépôt: 10.02.2016
(51) Int. Cl.: H02J 50/20, H02J 1/04, G05F 1/613

(54) **CARTE SANS CONTACT TÉLÉALIMENTÉE**
FERNGESPEISTE KONTAKTLOSE KARTE
REMOTELY POWERED CONTACTLESS CARD

(30) Priorité: 03.07.2015 FR 1556345
(43) Date de publication de la demande: 04.01.2017
(73) Titulaire: STmicroelectronics SA, 92120 Montrouge (FR)
(72) Inventeur: GOULIER, Julien, 38000 Grenoble (FR)
(74) Mandataire: Cabinet Beaumont

(56) Documents cités:
- EP-A2- 1 248 175
- US-A1- 2006 022 041
- US-A1- 2008 191 676

## Description

### Domaine

La présente demande concerne les cartes sans contact téléalimentées, c'est-à-dire des cartes destinées à échanger des données avec un terminal dont elles tirent leur alimentation.

### Exposé de l'art antérieur

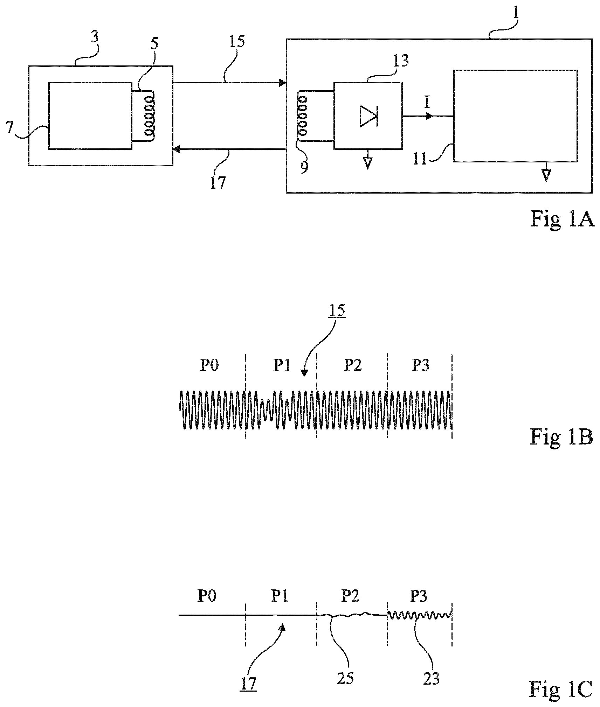

La figure 1A représente une carte sans contact téléalimentée 1 disposée au voisinage d'un terminal 3. Le terminal 3 comprend une antenne 5 et un circuit électronique 7. La carte sans contact 1 comprend une antenne 9 reliée à un module 11 de traitement de données, par l'intermédiaire d'un redresseur 13. Le module 11 et le redresseur sont reliés à une masse de la carte.

Le terminal émet un champ en permanence. Ainsi, quand la carte est proche du terminal, elle est alimentée par l'antenne 9 et est susceptible de recevoir un signal 15 et d'émettre un signal 17.

La figure 1B représente, en fonction du temps, le signal 15 émis par l'antenne 5 du terminal. La figure 1C représente le signal 17 émis par l'antenne 9 de la carte. On distingue quatre phases.

Durant une phase initiale P0, la carte reçoit du terminal de l'énergie qui permet l'activation du module de traitement 11. La présence de la carte est perçue par le terminal. Le terminal superpose alors, durant une phase P1 de réception par la carte, un signal de données au champ d'alimentation qu'il émet, et les données sont reçues par l'antenne 9 de la carte et transmises au module 11. Le module 11 traite ensuite les données durant une phase P2 de traitement des données pour préparer la réponse. La réponse est envoyée par la carte au terminal au cours d'une phase P3.

Pour envoyer la réponse, le module 11 fait varier le courant I qu'il consomme. Les variations 23 de courant dans l'antenne 9 sont alors détectées par le terminal.

Un problème est que, pendant la phase P2 de traitement des données, le courant consommé I par le module 11 varie en fonction du temps, du fait du traitement des données. Ceci entraine une variation 25 du courant dans l'antenne 9. Cette variation peut être interprétée par le terminal comme une réponse de la carte, d'où il résulterait une erreur.

Le document EP-A-1248175 montre une carte sans contact configurée pour être alimentée par une antenne connectée à l'entrée d'un redresseur dont la sortie est couplée à un module de traitement qui peut consommer un premier courant, la carte sans contact comprenant un circuit de régulation de courant également connecté à la sortie du redresseur, propre à absorber un deuxième courant tel que la somme des premier et deuxième courants soit un courant constant Dans ce dispositif, le circuit de régulation de courant reste actif et la consommation d'énergie n'est pas optimisés.

Ainsi, un mode de réalisation prévoit que le module de traitement est propre à fournir un signal de validation ou d'invalidation du circuit de régulation de courant. Selon un mode de réalisation, le courant constant est fixé par une source de courant.

Selon un mode de réalisation, la carte sans contact comprend un premier miroir de courant qui crée un troisième courant égal au premier courant divisé par une constante, K2 ; un deuxième miroir de courant dont une première branche reçoit le troisième courant et dont une deuxième branche est couplée à un noeud couplé à la source de courant ; et un troisième miroir de courant dont une première branche est couplée au noeud couplé à la source de courant et dont une deuxième branche est couplée à la sortie dudit redresseur.

Selon un mode de réalisation, la constante K2 est supérieure à 10, de préférence comprise entre 50 et 200.

Selon un mode de réalisation, le signal de validation active le circuit de régulation de courant durant les phases où la carte sans contact élabore un signal de réponse.

Selon un mode de réalisation, la source de courant est commandée proportionnellement à la puissance reçue par l'antenne.

Selon un mode de réalisation, ladite source de courant comprend un circuit de régulation d'impédance, couplé à la sortie du redresseur et aux deux extrémités de ladite antenne, le circuit de régulation d'impédance étant propre à limiter la tension en sortie de redresseur ; et un circuit générateur de courant configuré pour être commandé par le circuit de régulation d'impédance.

Selon un mode de réalisation, le circuit de régulation d'impédance comprend un premier et un deuxième transistors de type MOS à canal N, propres à absorber un courant lié à la puissance reçue par l'antenne, dont les grilles sont couplées entre elles et dont les drains sont couplés aux extrémités de ladite antenne ; le circuit générateur de courant comprend un troisième transistor de type MOS à canal N dont la grille est couplée aux grilles des premier et deuxième transistors ; et le circuit générateur de courant comprend également un quatrième miroir de courant dont une première branche est couplée au drain du troisième transistor, et dont une deuxième branche fournit le courant de ladite source de courant.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1A, déjà décrite, représente une carte sans contact téléalimentée disposée au voisinage d'un terminal ;
les figures 1B et 1C déjà décrites, représentent des signaux échangés entre la carte et le terminal de la figure 1A ;
la figure 2A est une représentation schématique d'un mode de réalisation d'une carte sans contact téléalimentée ;
la figure 2B représente un exemple de circuit électrique mettant en oeuvre le mode de réalisation de la figure 2A ;
la figure 3 est une représentation schématique d'un autre mode de réalisation d'une carte sans contact.

### Description détaillée

De mêmes éléments ont été désignés par de mêmes références dans les différentes figures. Par souci de clarté, seuls les éléments qui sont utiles à la compréhension des modes de réalisation décrits ont été représentés et sont détaillés.

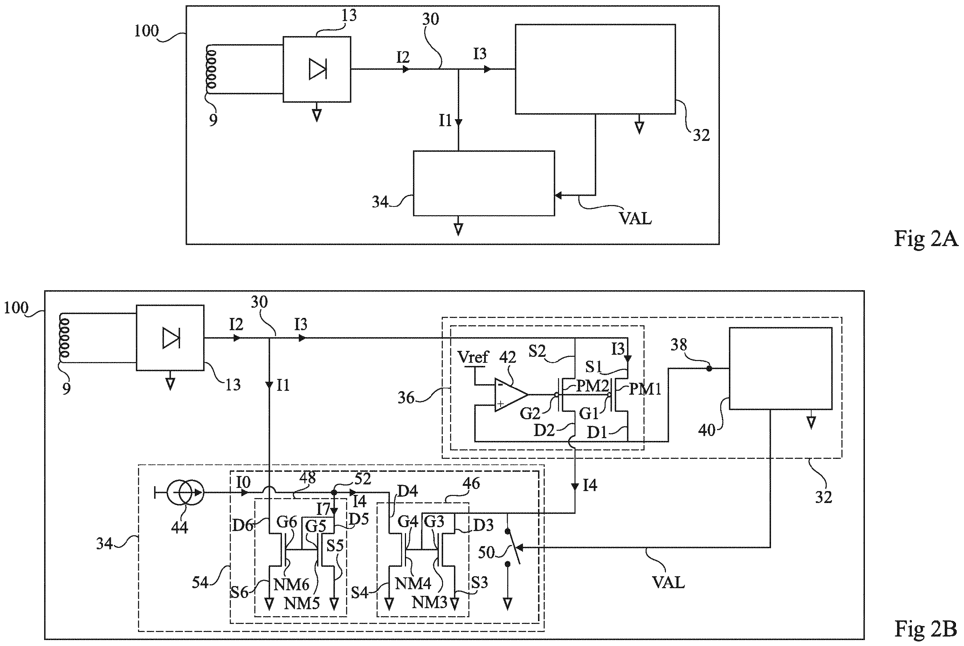

La figure 2A est une représentation schématique d'un mode de réalisation d'une carte sans contact téléalimentée 100. Une antenne 9 est couplée à l'entrée d'un redresseur 13. La sortie du redresseur 13 est couplée par un conducteur 30 à un module 32 de traitement de données couplé à la masse de la carte. Un circuit 34 est couplé à la masse de la carte, au conducteur 30, et au circuit 32 de traitement de données.

Le circuit 34 est un circuit de régulation de courant, propre à prélever un courant de régulation I1 sur le conducteur 30, en sorte que le courant I2 fourni par le redresseur, somme du courant I1 et du courant I3 consommé par le circuit de traitement de données, soit constant pendant la phase P2 susmentionnée.

Le circuit 34 peut être activé ou désactivé par un signal VAL en provenance du module 32 de traitement de données. Lorsque la carte, dont le circuit 34 est initialement désactivé, est au voisinage d'un terminal, les phases P0 à P4 décrites en relation avec la figure 1B se déroulent successivement. Le circuit 34 reste désactivé durant la phase initiale P0 et durant la phase P1 de réception par la carte.

Lorsque la phase P1 est terminée, le module 32 active le circuit 34 de régulation de courant, qui reste actif durant la phase P2 de traitement des données. Ainsi, durant la phase P2, le courant fourni par le redresseur 13 est constant, l'amplitude du courant induit dans l'antenne 9 reste constante, et aucune variation d'impédance ne peut être détectée par le terminal. L'antenne 9 ne transmet alors aucun signal.

Le module 32 désactive à nouveau le circuit 34 durant la phase P3 de réponse de la carte au terminal.

La figure 2B représente un exemple de circuit électrique mettant en oeuvre un mode de réalisation de la carte de la figure 2A.

Le module 32 de traitement de données comprend un régulateur de tension 36 couplé entre le conducteur 30 et la borne d'entrée 38 d'un circuit de traitement 40.

Le régulateur de tension 36 comprend un amplificateur opérationnel 42, dont l'entrée inverseuse est couplée à une tension de référence Vref et dont l'entrée non-inverseuse est couplée à la borne 38. La sortie de l'amplificateur 42 est couplée à la grille G1 d'un transistor PM1 de type MOS à canal P, dont la source S1 est connectée au conducteur 30 et le drain D1 est connecté à la borne 38. En fonctionnement, le régulateur de tension assure que la tension sur la borne 38 d'entrée du circuit de traitement reste égale à Vref.

Un transistor PM2 de type MOS à canal P est monté en miroir de courant avec le transistor PM1. La source S2 et la grille G2 du transistor PM2 sont respectivement connectées à la source S1 et à la grille G1. En fonctionnement, le rapport entre le courant I5 circulant dans le transistor PM1 et le courant I4 circulant dans le transistor PM2 est constant et égal à une valeur K1 supérieure à 10, de préférence de l'ordre de 50 à 200, pour réduire la consommation.

En fonctionnement, le courant I3 consommé par le module 32 est la somme des courants I5 et I4, et ainsi le courant I4 est égal à I3/K2, où K2 est une constante égale à K1 + 1.

Le circuit 34 de régulation de courant comprend une source de courant 44, deux miroirs de courant 46 et 48 et un interrupteur commandé 50. La source de courant 44 fournit un courant constant I0 et est connectée à une borne 52. L'ensemble des deux miroirs de courant 46 et 48, et de l'interrupteur commandé 50 est désigné par la référence 54.

Le miroir de courant 46 comprend deux transistors identiques NM3 et NM4 de type MOS à canal N dont les sources S3 et S4 sont connectées à la masse de la carte. Les grilles G3 et G4 des transistors NM3 et NM4 sont connectées entre elles, au drain D3 du transistor NM3 et au drain D2 du transistor PM2. Le drain D4 du transistor NM4 est connecté à la borne 52. En fonctionnement, les courants circulant dans les deux transistors NM3 et NM4 ont la même intensité.

Le miroir de courant 48 comprend deux transistors NM5 et NM6 de type MOS à canal N dont les sources S5 et S6 sont connectées à la masse de la carte. Les grilles G5 et G6 des transistors NM5 et NM6 sont connectées entre elles, au drain D5 du transistor NM5 et à la borne 52. Le drain D6 du transistor NM6 est connecté au conducteur 30. En fonctionnement, le rapport entre le courant de régulation I1 circulant dans le transistor NM6 et le courant I7 circulant dans le transistor NM5 est constant et égal à la valeur K2 susmentionnée.

L'interrupteur 50 est commandé par le signal VAL. Cet interrupteur est, dans cet exemple, disposé entre le drain D3 du transistor NM3 et la masse de la carte.

Lorsque l'activation du circuit 34 est commandée par le signal VAL, l'interrupteur 50 est ouvert, et le courant I4 traverse le transistor NM3. Par l'action du miroir de courant 46, un courant d'intensité I4 est prélevé sur le courant I0 fourni par la source 44. Le courant I7 qui circule dans le transistor NM5 est tel que I7 = I0 - I3/K2. Ainsi, par l'action du miroir de courant 48, I1 = K2*I7 = K2*I0 - I3, et donc I2 = K2 * I0, c'est-à-dire que le courant I2 de sortie du redresseur est constant et égal au courant constant I0 de la source de courant 44, multiplié par un facteur constant, K2.

Lorsque le signal VAL le désactive, le circuit de régulation de courant 34 absorbe un courant I1 constant égal à K2 * I0, et les variations du courant I2 à la sortie du redresseur 13 sont liées aux variations du courant I3.

Dans le mode de réalisation décrit en relation avec la figure 2B, si on règle le courant I0 pour que le circuit de régulation fonctionne bien quand la carte est près du terminal, cela entraine que, quand la carte est loin du terminal, la puissance consommée par le circuit de régulation de courant 34 limite la puissance disponible pour le module de traitement des données 32. En conséquence, la distance limite entre le terminal et la carte pour que la carte fonctionne est réduite.

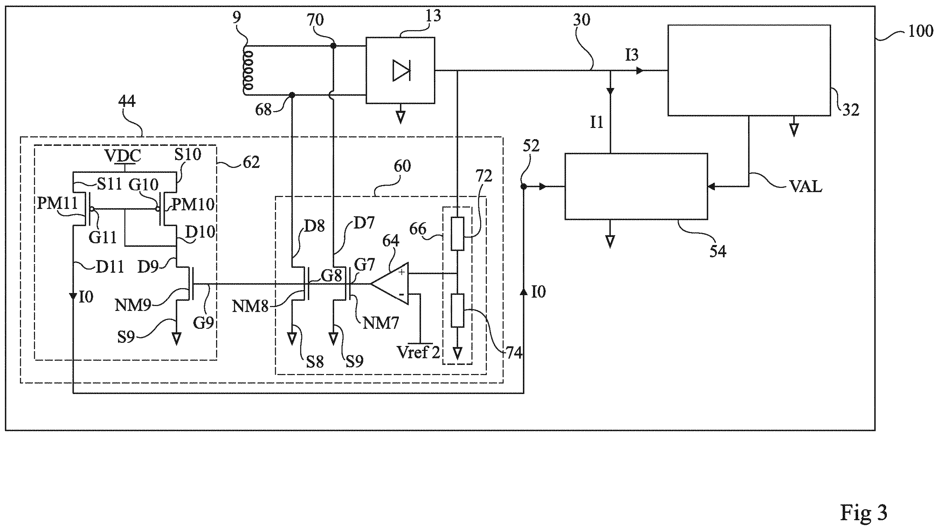

La figure 3 est une représentation schématique d'un autre mode de réalisation d'une carte sans contact. Dans ce mode de réalisation, la source de courant du circuit de régulation de courant est commandée à une valeur liée à la puissance reçue par la carte sans contact 100.

La figure 3 illustre en détail un mode de réalisation de la source de courant 44. Cette figure reprend des éléments de la figure 2B qui ne seront pas décrits à nouveau.

La source de courant 44 comprend un circuit 60 de régulation d'impédance et une source de courant commandée 62.

Le circuit de régulation d'impédance 60 comprend un amplificateur opérationnel 64 dont l'entrée inverseuse est couplée à une référence de tension Vref2. L'entrée non inverseuse de l'amplificateur 64 est connectée à un diviseur de tension 66. La sortie de l'amplificateur est connectée aux grilles G7 et G8 de deux transistors identiques NM7 et NM8 de type MOS à canal N. Les sources S7 et S8 des transistors NM7 et NM8 sont connectées à la masse de la carte. Le drain D7 du transistor NM7 est connecté à l'une des extrémités 70 de l'antenne, et le drain D8 du transistor NM8 est connecté à l'autre extrémité 68 de l'antenne.

Le diviseur de tension 66 comprend deux résistances 72 et 74 connectées à l'entrée non inverseuse de l'amplificateur 64. La résistance 74 est connectée à la masse, et la résistance 72 est connectée à la sortie du redresseur 13.

En fonctionnement, le circuit de régulation d'impédance 60 impose que la tension de sortie du régulateur reste égale à la tension constante Vref2 multipliée par une constante définie par les résistances 72 et 74. Le circuit 60 évite que la puissance reçue par le redresseur soit excessive et qu'il apparaisse des tensions trop élevées. Pour cela, en fonction de la puissance reçue par l'antenne, le circuit 60 dévie une partie du courant induit dans l'antenne vers la masse par l'intermédiaire des transistors NM8 et NM7.

La source de courant commandée 62 comprend un transistor NM9 de type MOS à canal N qui forme un miroir de courant avec les transistors NM7 et NM8. La grille G9 du transistor NM9 est connectée aux grilles G7 et G8, et sa source S9 est connectée à la masse. En fonctionnement, le rapport entre le courant circulant dans le transistor NM9 et le courant circulant dans les transistors NM7 et NM8 est égal à une constante définie par les surfaces des transistors.

La source de courant commandée 62 comprend aussi deux transistors PM10 et PM11, de type MOS à canal P, identiques et montés en miroir de courant. Le drain D10 du transistor PM10 est connecté au drain D9 du transistor NM9. Les sources S10 et S11 des transistors PM10 et PM11 sont connectées à une source de tension VDC, et leurs grilles G10 et G11 sont connectées entre elles et au drain D10.

Lorsque la carte est alimentée, le courant I0, en provenance de la source de tension VDC et circulant dans le transistor PM11, est identique au courant qui circule dans les transistors PM10 et NM9. Le courant I0 est donc proportionnel aux courants, qui sont fonctions de la puissance reçue, circulant dans les transistors NM7 et NM8 du circuit de régulation d'impédance. Ainsi, le courant I0 est élevé quand la puissance reçue est élevée, et faible quand la puissance reçue est faible.

Des modes de réalisation particuliers ont été décrits. Diverses variantes et modifications apparaîtront à l'homme de l'art. En particulier, il sera clair pour l'homme de l'art que l'interrupteur 50, permettant d'activer et de désactiver le circuit 34 de régulation de courant, peut être placé en d'autres emplacements du circuit. A titre d'exemple non limitatif, l'interrupteur 50 peut être placé entre la sortie de la source de courant 44 et la masse. Ou encore, le signal VAL peut aussi activer et désactiver directement la source de courant.

Bien que les circuits électriques décrits utilisent des transistors de type MOS, il sera clair pour l'homme de l'art qu'il est possible de remplacer les transistors MOS, en partie ou en totalité, par des transistors bipolaires.

Bien que les rapports des miroirs de courant 46 et 48 du circuit 34 de régulation de courant décrits soient respectivement égaux à 1 et à K2, il sera clair pour l'homme de l'art qu'il est possible de choisir d'autres combinaisons de miroirs de courant ayant des rapports dont le produit est K2.

Bien que le courant I4, égal au courant d'entrée du circuit de traitement de données divisé par la constante K2, et utilisé par le circuit 34 de régulation de courant, soit obtenu par un miroir de courant positionné sur un régulateur de tension à base de transistors MOS de type P, d'autres modes de réalisation apparaîtront à l'homme de l'art pour créer ce courant. A titre d'exemple non limitatif, le courant I4 peut être créé à partir d'un régulateur de tension à base de transistors MOS de type N, ou sous forme d'un miroir de courant indépendant de la régulation de tension.

## Revendications

1. Carte sans contact (100) configurée pour être alimentée par une antenne (9) connectée à l'entrée d'un redresseur (13) dont la sortie est couplée à un module de traitement (32) qui peut consommer un premier courant (I3), la carte sans contact comprenant un circuit de régulation de courant (34) également connecté à la sortie du redresseur (13), propre à absorber un deuxième courant (I1) tel que la somme des premier et deuxième courants soit un courant constant, **caractérisé en ce que** le module de traitement (32) est configuré pour fournir un signal (VAL) de validation ou d'invalidation du circuit de régulation de courant (34).

2. Carte sans contact selon la revendication 1, comprenant une source de courant (44) adaptée pour fixer le courant constant.

3. Carte sans contact selon la revendication 2, comprenant :
un premier miroir de courant qui crée un troisième courant (I4) égal au premier courant (I3) divisé par une constante, K2 ;
un deuxième miroir de courant (46) dont une première branche reçoit le troisième courant (I4) et dont une deuxième branche est couplée à un noeud (52) couplé à la source de courant (44) ; et
un troisième miroir de courant (48) dont une première branche est couplée au noeud (52) couplé à la source de courant (44) et dont une deuxième branche est couplée à la sortie dudit redresseur (13).

4. Carte sans contact selon la revendication 3, dans laquelle la constante K2 est supérieure à 10, de préférence comprise entre 50 et 200.

5. Carte sans contact selon la revendication 1, dans laquelle le signal de validation (VAL) est configuré pour activer le circuit de régulation de courant (34) durant les phases (P2) où la carte sans contact élabore un signal de réponse.

6. Carte sans contact selon l'une quelconque des revendications 2 à 5, dans laquelle la source de courant (44) est commandée proportionnellement à la puissance reçue par l'antenne (9) .

7. Carte sans contact selon la revendication 6, dans laquelle ladite source de courant (44) comprend :
un circuit de régulation d'impédance (60), couplé à la sortie du redresseur (13) et aux deux extrémités (68, 70) de ladite antenne (9), le circuit de régulation d'impédance étant propre à limiter la tension en sortie de redresseur (13) ; et
un circuit générateur de courant (62) configuré pour être commandé par le circuit de régulation d'impédance.

8. Carte sans contact selon la revendication 7, dans laquelle :
le circuit de régulation d'impédance (60) comprend un premier et un deuxième transistors de type MOS à canal N (NM7, NM8), propres à absorber un courant lié à la puissance reçue par l'antenne, dont les grilles (G7, G8) sont couplées entre elles et dont les drains sont couplés aux extrémités (68, 70) de ladite antenne (9) ;
le circuit générateur de courant (62) comprend un troisième transistor de type MOS à canal N (NM9) dont la grille (G9) est couplée aux grilles (G7, G8) des premier et deuxième transistors ; et
le circuit générateur de courant (62) comprend également un quatrième miroir de courant dont une première branche est couplée au drain (D9) du troisième transistor (NM9), et dont une deuxième branche fournit le courant de ladite source de courant (44) .

## Patentansprüche

1. Kontaktlose Karte (100), die so konfiguriert ist, dass sie von einer Antenne (9) gespeist wird, die mit dem Eingang eines Gleichrichters (13) verbunden ist, dessen Ausgang mit einer Verarbeitungseinheit (32) gekoppelt ist, die einen ersten Strom (I3) verbrauchen kann, wobei die kontaktlose Karte eine Stromregelungsschaltung (34) aufweist, die ebenfalls mit dem Ausgang des Gleichrichters (13) verbunden ist und die in der Lage ist, einen zweiten Strom (I1) aufzunehmen, so dass die Summe des ersten und des zweiten Stroms ein konstanter Strom ist, **dadurch gekennzeichnet, dass** die Verarbeitungseinheit (32) so konfiguriert ist, dass sie ein Signal (VAL) zum Aktivieren oder Deaktivieren der Stromregelungsschaltung (34) liefert.

2. Kontaktlose Karte nach Anspruch 1, die eine Stromquelle (44) aufweist, die zum Einstellen des konstanten Stroms eingerichtet ist.

3. Kontaktlose Karte nach Anspruch 2, die Folgendes aufweist:
einen ersten Stromspiegel, der einen dritten Strom (I4) erzeugt, der gleich dem ersten Strom (I3) geteilt durch eine Konstante, K2, ist;
einen zweiten Stromspiegel (46) mit einem ersten Zweig, der den dritten Strom (I4) empfängt, und mit einem zweiten Zweig, der mit einem mit der Stromquelle (44) gekoppelten Knoten (52) verbunden ist; und
einen dritten Stromspiegel (48) mit einem ersten Zweig, der mit dem mit der Stromquelle (44) gekoppelten Knoten (52) gekoppelt ist, und mit einem zweiten Zweig, der mit dem Ausgang des Gleichrichters (13) gekoppelt ist.

4. Kontaktlose Karte nach Anspruch 3, wobei die Konstante K2 größer als 10 ist, vorzugsweise im Bereich von 50 bis 200 liegt.

5. Kontaktlose Karte nach Anspruch 1, wobei das Aktivierungssignal (VAL) so konfiguriert ist, dass es die Stromregelungsschaltung (34) während Phasen (P2) aktiviert, in denen die kontaktlose Karte ein Antwortsignal vorbereitet.

6. Kontaktlose Karte nach einem der Ansprüche 2 bis 5, wobei die Stromquelle (44) proportional zu der von der Antenne (9) empfangenen Leistung gesteuert wird.

7. Kontaktlose Karte nach Anspruch 6, wobei die Stromquelle (44) Folgendes aufweist:
eine Impedanzregelungsschaltung (60), die mit dem Ausgang des Gleichrichters (13) und mit den beiden Enden (68, 70) der Antenne (9) gekoppelt ist, wobei die Impedanzregelungsschaltung in der Lage ist, die Ausgangsspannung des Gleichrichters (13) zu begrenzen; und
eine Stromerzeugungsschaltung (62), die so konfiguriert ist, dass sie von der Impedanzregelungsschaltung gesteuert wird.

8. Kontaktlose Karte nach Anspruch 7, wobei:
die Impedanzregelungsschaltung (60) einen ersten und einen zweiten N-Kanal-MOS-Transistor (NM7, NM8) aufweist, die in der Lage sind, einen auf die von der Antenne empfangene Leistung bezogenen Strom zu absorbieren, wobei ihre Gates (G7, G8) miteinander gekoppelt sind und ihre Drains mit den Enden (68, 70) der Antenne (9) gekoppelt sind;
die Stromerzeugungsschaltung (62) einen dritten N-Kanal-MOS-Transistor (NM9) aufweist, dessen Gate (G9) mit den Gates (G7, G8) des ersten und zweiten Transistors gekoppelt ist; und
die Stromerzeugungsschaltung (62) auch einen vierten Stromspiegel aufweist, der einen ersten Zweig aufweist, der mit dem Drain (D9) des dritten Transistors (NM9) gekoppelt ist, und einen zweiten Zweig aufweist, der den Strom der Stromquelle (44) liefert.

## Claims

1. A contactless card (100) configured to be powered by an antenna (9) connected to the input of a rectifier (13) having its output coupled to a processing unit (32) which may consume a first current (13), the contactless card comprising a current regulation circuit (34) also connected to the output of the rectifier (13), capable of absorbing a second current (I1) such that the sum of the first and second currents is a constant current, **characterized in that** the processing unit (32) is configured to provide a signal (VAL) for enabling or disabling the current regulation circuit (34).

2. The contactless card of claim 1, comprising a current source (44) adapted to set the constant current.

3. The contactless card of claim 2, comprising:
a first current mirror which creates a third current (14) equal to the first current (13) divided by a constant, K2;
a second current mirror (46) having a first branch receiving the third current (14) and having a second branch coupled to a node (52) coupled to the current source (44); and
a third current mirror (48) having a first branch coupled to the node (52) coupled to the current source (44) and having a second branch coupled to the output of said rectifier (13) .

4. The contactless card of claim 3, wherein constant K2 is greater than 10, preferably in the range from 50 to 200.

5. The contactless card of claim 1, wherein the enable signal (VAL) is configured to activate the current regulation circuit (34) during phases (P2) where the contactless card prepares a response signal.

6. The contactless card of any one of claim 2 to 5, wherein the current source (44) is controlled proportionally to the power received by the antenna (9).

7. The contactless card of claim 6, wherein said current source (44) comprises:
an impedance regulation circuit (60), coupled to the output of the rectifier (13) and to the two ends (68, 70) of said antenna (9), the impedance regulation circuit being capable of limiting the output voltage of the rectifier (13); and
a current generation circuit (62) configured to be controlled by the impedance regulation circuit.

8. The contactless card of claim 7, wherein:
the impedance regulation circuit (60) comprises a first and a second N-channel MOS transistors (NM7, NM8), capable of absorbing a current related to the power received by the antenna, having their gates (G7, G8) coupled together and having their drains coupled to the ends (68, 70) of said antenna (9);
the current generation circuit (62) comprises a third N-channel MOS transistor (NM9) having its gate (G9) coupled to the gates (G7, G8) of the first and second transistors; and
the current generation circuit (62) also comprises a fourth current mirror having a first branch coupled to the drain (D9) of the third transistor (NM9), and having a second branch supplying the current of said current source (44).
